# FASCICULE DE BREVET EUROPEEN

(11) **EP 4 733 194 B1**
(45) Date de publication et mention de la délivrance du brevet: **09.12.2026**
(21) Numéro de dépôt: 25201306.5
(22) Date de dépôt: 10.09.2025
(51) Int. Cl.: B64D 29/06, B64D 29/08

(54) **NACELLE POUR UN MOTEUR D'AÉRONEF**
GONDEL FÜR EINEN FLUGZEUGMOTOR
NACELLE FOR AN AIRCRAFT ENGINE

(30) Priorité: 24.10.2024 FR 2411650
(43) Date de publication de la demande: 29.04.2026
(73) Titulaire: AIRBUS OPERATIONS (S.A.S.), 31060 Toulouse (FR)
(72) Inventeur: GRANGE, Quentin, 31060 TOULOUSE (FR); ALAOUI, Miloud, 31060 TOULOUSE (FR)
(74) Mandataire: Airbus-OPS SAS

(56) Documents cités:
- US-A1- 2013 091 825
- US-A1- 2019 135 447
- US-B1- 6 227 485
- US-B2- 11 427 341
- US-B2- 11 473 528
- US-B2- 8 627 644

## Description

### DOMAINE TECHNIQUE

La présente invention concerne une nacelle pour un système de motorisation d'aéronef qui comporte au moins un capot mobile et un ensemble moteur arrangé pour déplacer ledit au moins un capot mobile, un système de motorisation d'aéronef comportant une telle nacelle et un aéronef comportant au moins un tel système de motorisation.

### ÉTAT DE LA TECHNIQUE ANTÉRIEURE

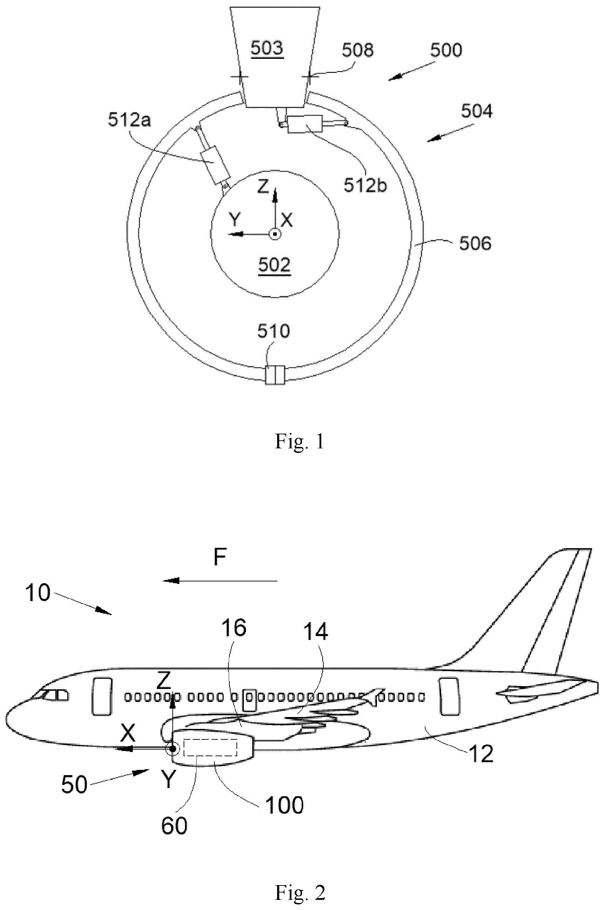

La Fig. 1 montre un système de motorisation 500 de l'état de la technique. Ce système de motorisation 500 équipe un aéronef et il comporte classiquement un noyau 502 entouré par une nacelle 504 qui forme entre autres une surface aérodynamique autour du noyau 502 et le système de motorisation est généralement fixé sous une aile de l'aéronef par un mât d'accrochage 503.

La nacelle 504 comporte des capots 506 qui sont montés articulés sur le mât d'accrochage 503 par l'intermédiaire de charnières 508 et qui sont verrouillés en position fermée par un système de verrouillage qui verrouille les capots 506 l'un par rapport à l'autre au niveau d'un longeron inférieur 510 intégré dans chaque capot 506.

Pour des raisons de maintenance, il est nécessaire de pouvoir ouvrir les capots 506 en les faisant pivoter autour des axes des charnières 508. Pour ouvrir un capot 506, le technicien déverrouille le système de verrouillage et soulève le capot 506, la manœuvre inverse permettant de refermer le capot 506.

Un vérin 512a-b est mis en place pour aider à l'ouverture d'un capot 506.

Dans certains arrangements (à gauche sur la Fig. 1), le vérin 512a est monté entre le capot 506 et une structure du noyau 502.

Dans d'autres arrangements (à droite sur la Fig. 1), le vérin 512b est monté entre le capot 506 et une structure du mât d'accrochage 503.

L'utilisation de vérins peut limiter l'angle d'ouverture des capots et il est souhaitable de trouver un arrangement qui permet d'avoir une ouverture plus importante des capots.

En outre, avec les arrangements de l'état de la technique, les vérins 512b se trouvent potentiellement soumis à de fortes températures et le changement du noyau peut être gêné par la présence des vérins 512a.

Le document US11473528 décrit un turboréacteur avec un capot articulé selon l'art antérieur. Le document US2013/091825 décrit une nacelle selon l'art antérieur.

Le document US11427341 décrit un assemblage pour un système de propulsion selon l'art antérieur.

Il est donc souhaitable de trouver un arrangement qui procure des améliorations.

### EXPOSÉ DE L'INVENTION

Un objet de la présente invention est de proposer une nacelle d'un système de motorisation d'aéronef qui comporte au moins un capot mobile et un ensemble moteur arrangé pour déplacer ledit au moins un capot mobile.

À cet effet, est proposée une nacelle pour un système de motorisation d'un aéronef, ladite nacelle s'étendant autour d'un axe longitudinal et comportant :
- au moins un capot monté articulé entre une position fermée et une position ouverte autour d'un axe de charnière s'étendant parallèlement à l'axe longitudinal X,
- pour chaque capot, au moins un ensemble moteur comportant un arbre d'actionnement mobile en rotation autour dudit axe de charnière et où ledit arbre d'actionnement est configuré pour déplacer ledit capot associé entre ladite position fermée et ladite position ouverte.

De cette manière, l'ensemble moteur est intégré à la charnière de sorte à garantir un encombrement optimal et fournir un accès libre de tout obstacle au noyau disposé dans la nacelle.

Avantageusement, ledit ensemble moteur comporte un moteur avec un arbre moteur globalement parallèle audit axe de charnière et un système d'engrenage présentant un pignon d'entrée solidaire de l'arbre moteur et un pignon de sortie solidaire de l'arbre d'actionnement, où le rapport d'engrenage du système d'engrenage est supérieur à 1.

Selon un aspect particulier de l'invention, ledit moteur est un moteur électrique.

Selon un autre aspect particulier de l'invention, ledit moteur est un moteur hydraulique.

Selon encore un autre aspect particulier de l'invention, ledit ensemble moteur comporte des moyens de verrouillage configurés pour verrouiller et déverrouiller la position dudit capot.

Selon un aspect particulier de l'invention, ledit moteur est destiné à être fixé à un mât d'accrochage dudit aéronef et ledit arbre d'actionnement est fixé au capot.

Selon une variante, ledit moteur est fixé au capot et ledit arbre d'actionnement est destiné à être fixé à un mât d'accrochage dudit aéronef.

Selon un aspect particulier de cette variante, ledit capot comporte une paroi intérieure et une paroi extérieure qui délimitent ensemble un logement et ledit moteur est fixé dans ledit logement.

Selon un aspect particulier de l'invention, chaque capot comporte deux ensembles moteur espacés l'un de l'autre le long dudit axe de charnière.

L'invention concerne également un système de motorisation pour un aéronef comportant un noyau et une nacelle tel que décrit précédemment qui entoure le noyau.

L'invention concerne aussi un aéronef comportant au moins un tel système de motorisation.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une représentation schématique en vue de face d'une nacelle de l'état de la technique,
[Fig. 2] est une vue de côté d'un aéronef comportant une nacelle selon l'invention,
[Fig. 3] est une représentation schématique en vue de face d'une nacelle selon l'invention en position fermée pour chaque capot,
[Fig. 4] est une représentation schématique en vue de face de la nacelle de la Fig. 3 en position fermée pour l'un des capots et en position partiellement ouverte pour l'autre capot, et
[Fig. 5] est une représentation schématique partielle et en vue de dessus d'une nacelle de la Fig. 3.

### EXPOSÉ DÉTAILLÉ DE MODES DE RÉALISATION

Dans la description qui suit, les termes relatifs à une position sont pris en référence à un aéronef en position d'avancement comme il est représenté sur la Fig. 2, et où la flèche F montre la direction d'avancement de l'aéronef en vol.

La Fig. 2 montre un aéronef 10 comportant un fuselage 12 de part et d'autre duquel est fixée une aile 14. Chaque aile 14 supporte au moins un système de motorisation 50 par l'intermédiaire d'un mât d'accrochage 16 fixé entre une structure de l'aile 14 et une structure du mât d'accrochage 16.

Le système de motorisation 50 comporte un noyau 60 (en traits pointillés sur la Fig. 2) entouré par une nacelle 100 selon l'invention.

Dans la description qui suit, et par convention, on appelle X l'axe longitudinal de la nacelle 100 qui est parallèle à l'axe longitudinal de l'aéronef 10 ou axe de roulis, orienté positivement dans le sens d'avancement de l'aéronef 10, on appelle Y l'axe transversal qui est parallèle à l'axe de tangage de l'aéronef 10 qui est horizontal lorsque l'aéronef 10 est au sol, et Z l'axe vertical qui est parallèle à l'axe de lacet lorsque l'aéronef 10 est au sol, ces trois directions X, Y et Z étant orthogonales entre elles.

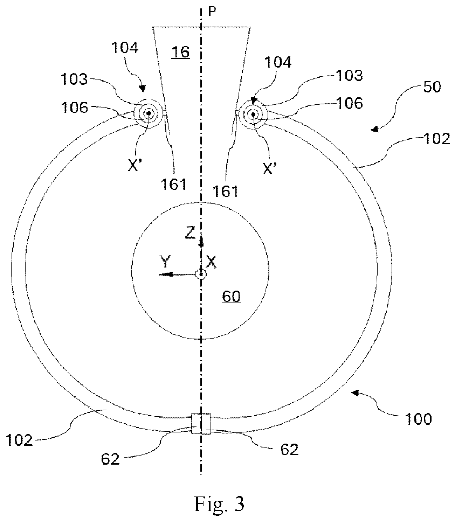

La nacelle 100 présente un plan médian vertical P de symétrie qui est confondu avec le plan vertical XZ et, dans le mode de réalisation de l'invention présenté à la Fig. 3, la nacelle 100 comporte de part et d'autre du plan médian vertical P, un capot 102.

Chaque capot 102 prend ici la forme d'un demi-cylindre de manière à former ensemble un cylindre entourant le noyau 60.

Le noyau 60 prend par exemple la forme d'un turboréacteur double flux avec à l'avant une soufflante. Le capot 102 peut alors constituer le capot de la soufflante ou le capot pour le système d'inverseur de poussée.

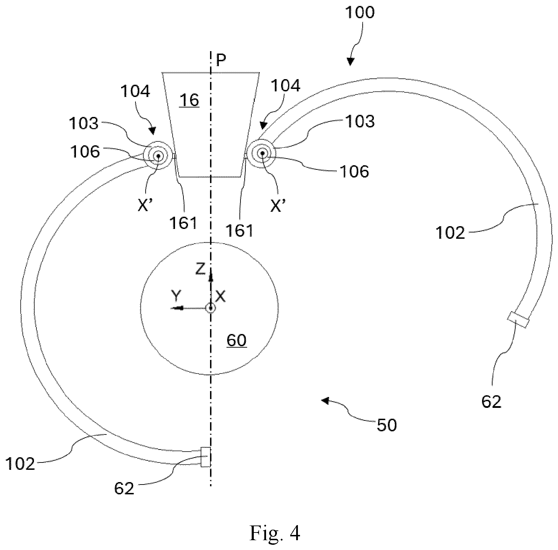

Chaque capot 102 est monté articulé sur une structure qui peut être une structure du mât d'accrochage 16. L'articulation de chaque capot 102 s'effectue autour d'un axe de charnière 103 et chaque capot 102 est mobile entre une position fermée dans laquelle le capot 102 est resserré autour du noyau 60 et une position ouverte dans laquelle le capot 102 est écarté du noyau 60. Sur la Fig. 4, le capot 102 à bâbord est en position ouverte et le capot 102 à tribord est en position fermée.

En position fermée, les deux capots 102 viennent s'accoster l'un contre l'autre, au niveau d'un longeron inférieur 62 de chaque capot 102. Chaque capot 102 vient ainsi au contact du longeron inférieur 62 de l'autre capot 102, au niveau de son propre longeron inférieur 62, qui est, en position fermée, agencé au niveau de la partie basse de la nacelle 100, à 6 heures.

Les axes de charnières 103 sont disposés en partie haute de chaque capot 102 et les capots 102 sont montés articulés sur le mât d'accrochage 16 autour de l'axe de charnière 103 associé. Pour verrouiller chaque capot 102 en position fermée, la nacelle 100 peut comporter des systèmes de verrouillage (non illustrés) accessibles depuis l'extérieur de la nacelle 100 par un technicien. Chaque système de verrouillage peut prendre toutes les formes connues par l'homme du métier et il prend alternativement une position verrouillée dans laquelle il verrouille le capot 102 associé en position fermée, ou une position déverrouillée dans laquelle il ne verrouille pas le capot 102 associé qui est alors libre de se déplacer de la position fermée à la position ouverte et inversement. Pour des raisons de redondance, chaque capot 102 est muni d'au moins deux systèmes de verrouillage distincts.

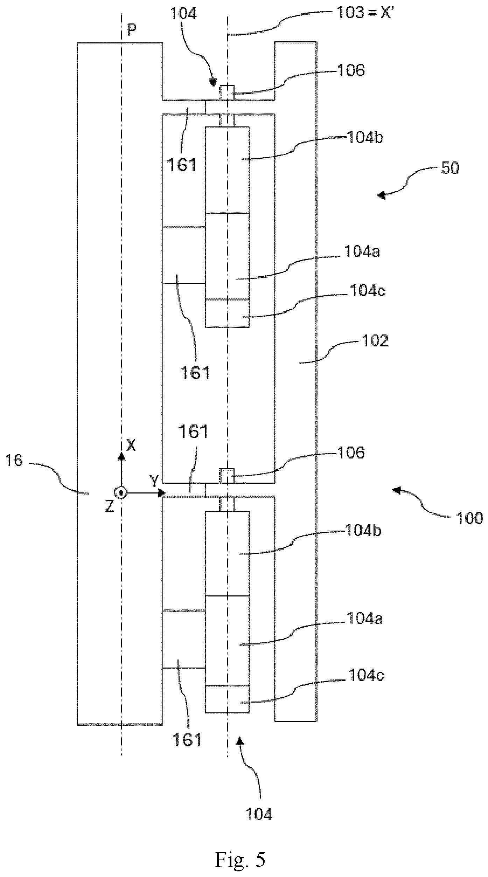

D'une manière générale, la nacelle 100 comporte au moins un capot 102 et au moins un ensemble moteur 104 pour chaque capot 102. Dans le mode de réalisation de l'invention présenté aux Figs. 3 et 4, un seul ensemble moteur 104 pour chaque capot 102 est visible. Bien que l'invention pourrait permettre de déplacer en rotation le capot 102 en ne mettant en œuvre qu'un seul ensemble moteur 104 par capot 102, il est prévu qu'il y ait deux ensembles moteur 104 (comme illustrés sur la Fig. 5), ou plus, par capot 102 afin de répartir le couple nécessaire au déplacement de chaque capot 102 sur les différents ensembles moteur 104 et d'améliorer la sécurité des opérateurs en introduisant des chemins d'effort indépendants les uns des autres.

Chaque ensemble moteur 104 présente un arbre d'actionnement 106 mobile en rotation autour d'un axe de rotation X' qui s'étend globalement coaxialement à l'axe de charnière 103 du capot 102, c'est-à-dire aux tolérances de construction près. En d'autres termes, l'arbre d'actionnement 106 est mobile en rotation autour de l'axe de charnière 103.

Chaque ensemble moteur 104 est arrangé pour faire tourner chaque arbre d'actionnement 106 alternativement dans un sens d'ouverture pour faire passer le capot 102 associé de la position fermée à la position ouverte et dans un sens de fermeture pour faire passer le capot 102 associé de la position ouverte à la position fermée. Le sens d'ouverture est inverse par rapport au sens de fermeture.

Avec un tel arrangement, l'ensemble moteur 104 est intégré à la charnière entre le capot et le mât d'accrochage 16 de sorte à garantir un encombrement optimal. De plus, un tel arrangement permet de fournir un accès libre de tout obstacle au noyau disposé dans la nacelle. En effet, il n'est ainsi plus nécessaire de mettre en œuvre un système de vérin entre le mât d'accrochage et le capot, ou entre le noyau et le capot. L'accès au noyau est ainsi libéré et les opérations de maintenance sont facilitées puisque les opérateurs disposent d'un espace de travail plus important, en particulier lorsque le noyau doit être changé et donc retiré de la nacelle.

Pour actionner chaque ensemble moteur 104, une unité de contrôle (non illustrée) est prévue pour commander la rotation dans un sens ou dans l'autre et l'arrêt en rotation en fonction des besoins. L'unité de contrôle prend par exemple la forme d'un processeur qui peut être complété d'une mémoire vive RAM (« Random Access Memory » en anglais), d'une mémoire morte ROM (« Read Only Memory » en anglais) ou une mémoire Flash, d'une unité de stockage ou un lecteur de support de stockage (« STCK »), tel qu'un lecteur de cartes SD (« Secure Digital » en anglais) ou un disque dur HDD (« Hard Disk Drive » en anglais), et d'une interface de communication pour communiquer avec l'ensemble moteur 104.

Avec un tel arrangement, il suffit donc de commander l'ensemble moteur 104 pour faire tourner le/les arbres d'actionnement 106 pour ouvrir ou fermer chaque capot 102 associé avec un système simple et présentant un angle d'ouverture important.

En outre, les ensembles moteur 104 sont disposés en partie supérieure de la nacelle 100, c'est-à-dire globalement à 12.00 heures et au voisinage du mât d'accrochage 16, c'est-à-dire à distance d'un éventuel rayonnement thermique provenant du noyau 60. Comme illustré sur la Fig. 5, chaque ensemble moteur 104 peut être fixé directement sur le mât d'accrochage 16, ou sur une structure 161 elle-même fixée au mât d'accrochage 16. Plus précisément, le moteur 104 ainsi que la boîte de vitesses 104b et les moyens de verrouillage 104c lorsqu'ils sont mis en œuvre (et qui décrits dans la suite de cette description) sont fixés au mât d'accrochage 16. L'arbre d'actionnement 106 est quant à lui fixé au capot 102. Dans ce cas, le moteur 104 ainsi que la boîte de vitesses 104b et les moyens de verrouillage 104c lorsqu'ils sont mis en œuvre restent fixes par rapport au mât d'accrochage 16 et l'arbre d'actionnement 106 pivote avec le capot 102 autour de l'axe de charnière 103 (qui est globalement identique à l'axe de rotation X') lors de l'ouverture/fermeture du capot 102.

Dans une variante (non illustrée), chaque ensemble moteur 104 peut être intégré dans l'épaisseur d'une paroi du capot 102, à proximité du mât d'accrochage 16. Plus précisément, le capot 102 comporte une paroi intérieure et une paroi extérieure qui délimitent ensemble un logement dans lequel sont fixés le moteur 104a ainsi que la boîte de vitesses 104b et les moyens de verrouillage 104c lorsqu'ils sont mis en œuvre. L'arbre d'actionnement 106 est quant à lui fixé au mât d'accrochage 16. Dans ce cas, lors du pivotement de l'arbre d'actionnement 106, le capot 102 et le moteur 104a ainsi que la boîte de vitesses 104b et les moyens de verrouillage 104c lorsqu'ils sont mis en œuvre pivotent autour de l'axe de charnière 103 (qui est globalement identique à l'axe de rotation X') lors de l'ouverture/fermeture du capot 102. Une telle mise en œuvre permet de fournir une protection de l'ensemble moteur 104, en particulier contre la chaleur. Ainsi, cette disposition particulière permet avantageusement de prolonger la durée de vie de l'ensemble moteur 104, de réduire le risque d'apparition de potentielles pannes au sein dudit ensemble moteur et de réduire les coûts de fabrication dudit ensemble moteur, ainsi que le poids dudit ensemble moteur, puisqu'il est alors possible d'utiliser des matériaux nécessitant une tenue à la température plus faible que lorsque l'ensemble moteur 104 est plus exposé aux rayonnements du noyau 60.

L'ensemble moteur 104 comporte ici un moteur électrique 104a avec un arbre moteur parallèle à l'axe de rotation X' et, de préférence, une boîte de vitesses 104b qui s'étend globalement dans le prolongement du moteur électrique 104a et qui s'étend globalement parallèlement à l'axe de rotation X'. De préférence, la boîte de vitesses 104b s'étend coaxialement à l'axe de rotation X'(et donc à l'axe de charnière 103) pour limiter l'encombrement de l'ensemble moteur 104. La boîte de vitesses 104b est de préférence du type compacte et à haut niveau d'engrènement, et comporte par exemple un système d'engrenage comprenant des trains planétaires disposés en série.

Pour faciliter le déplacement du capot 102, le rapport d'engrenage du système d'engrenage de la boîte de vitesses 104b est supérieur à 1. La mise en place d'un système d'engrenage où le rapport d'engrenage est plus important, permet de réduire le couple nécessaire à l'ouverture et à la fermeture du capot 102.

Dans cet exemple, la boîte de vitesses 104b comporte un système d'engrenage présentant un pignon d'entrée solidaire de l'arbre moteur et un pignon de sortie solidaire de l'arbre d'actionnement 106.

Le moteur électrique 104a de l'ensemble 104 est alimenté électriquement par une source électrique et commandé en rotation par l'unité de contrôle.

Le moteur électrique 104a est ainsi disposé globalement coaxialement à l'axe de la charnière 103 de sorte à fournir un important un gain de place et une meilleure protection, en particulier contre la chaleur.

L'ensemble moteur 104 peut également comporter des moyens de verrouillage 104c permettant de maintenir le capot 102 en position ouverte, ou d'empêcher la fermeture du capot 102, notamment en cas de perte de la source électrique du moteur électrique. Ces moyens de verrouillage 104c peuvent ainsi avoir une fonction de maintien des capots 102 dans leur position d'ouverture, et/ou de sécurisation des capots en cas de panne/défaillance système. Les moyens de verrouillage 104c peuvent par exemple prendre la forme d'un système de frein mécanique actionnable à tout moment pendant la course ou d'un système de verrou mécanique actionnable, de préférence, uniquement en position totalement déployée. Il est envisageable que le verrou soit actionné automatiquement en position totalement déployée et qu'il soit désactionné par l'action d'un solénoïde alimenté en courant, ou alors qu'il soit actionné et désactionné par l'action du solénoïde. Il est à noter qu'en cas de perte de la source électrique, on pourrait envisager la mise en œuvre d'un système de freinage rhéostatique (c'est-à-dire des résistances de décharge) qui viendrait contrôler la redescente du capot 102 à une vitesse suffisamment lente pour ne pas être dangereuse pour les opérateurs afin d'éviter que le capot 102 ne reste bloqué en position totalement ouverte.

Ainsi, la mise en œuvre d'un système de maintien des capots 102 en position ouverte n'est plus nécessaire. Toutefois, pour des raisons de redondance et de sécurité, la nacelle 100 pourrait être équipée, en plus de l'ensemble moteur 104, pour chaque capot 102, d'un système de maintien (non illustré) utilisé uniquement lors des opérations de maintenance. Un tel système de maintien est par exemple fixé entre le noyau 60 et le capot 102. Un tel système de maintien peut par exemple prendre la forme d'une tige de maintien, également appelée tige de retenue ou bras de soutien.

Pour connaître la position de chaque capot 102, et ainsi pouvoir arrêter l'ensemble moteur 104 lorsque cela est nécessaire, l'ensemble moteur 104 peut être équipé d'un capteur de position qui est arrangé pour détecter la position angulaire dudit arbre d'actionnement 106 et donc dudit capot 102 associé.

Pour des raisons de sécurité et éviter que le capot 102 aille en-deçà de la position fermée ou au-delà de la position ouverte, l'ensemble moteur 104 peut comporter des butées limitant le déplacement en rotation de l'arbre d'actionnement 106. Il est donc possible de mettre en œuvre une butée qui arrête la rotation de l'arbre d'actionnement lorsqu'il a atteint la position correspondant à la position fermée du capot 102, et une butée qui arrête la rotation de l'arbre d'actionnement lorsqu'il a atteint la position correspondant à la position ouverte du capot 102. Par exemple, les butées peuvent être des butées numériques qui sont programmées pour chaque moteur électrique 104a. Dans une variante, les butées peuvent être des butées mécaniques disposées dans les axes de charnières ou des butées fixées sur le mât qui viennent appliquer une action sur le capot 102 lorsque la position ouverte ou fermée du capot 102 a été atteinte.

Selon une configuration, le moteur électrique de l'ensemble 104a est alimenté par de l'énergie électrique provenant du réseau électrique de l'aéronef (lui-même branché sur un réseau électrique local au sol), ou par une batterie par exemple, qui peut être déportée du mât d'accrochage 16, ladite batterie pouvant être soit dans l'aéronef, soit au sol.

En alternative au moteur électrique tel que décrit précédemment, l'ensemble moteur 104 peut comporter un moteur hydraulique alimenté par de l'énergie hydraulique provenant d'un système de refroidissement de l'aéronef, tel qu'un système de climatisation, ou par une source d'énergie hydraulique externe, qui peut être déportée du mât d'accrochage 16.

En outre, l'ensemble moteur 104 comportant un moteur hydraulique peut également être alimenté par un ensemble moteur électrique, pompe hydraulique et réservoir alimenté par de l'énergie électrique provenant du réseau électrique de l'aéronef (lui-même branché sur un réseau électrique local au sol), ou par une batterie par exemple, qui peut être déportée du mât d'accrochage 16, ladite batterie pouvant être soit dans l'aéronef, soit au sol.

L'invention a été décrite ci-dessus pour des capots 102 entourant le noyau 60 du système de motorisation 50. L'invention peut également être appliquée à d'autres types de capots, et notamment à des capots de maintenance.

## Revendications

1. Nacelle (100) pour un système de motorisation (50) d'un aéronef (10), ladite nacelle (100) s'étendant autour d'un axe longitudinal (X) et comportant :
- au moins un capot (102) monté articulé entre une position fermée et une position ouverte autour d'un axe de charnière (103) qui s'étend parallèlement à l'axe longitudinal (X),
- pour chaque capot (102), au moins un ensemble moteur (104) comportant un arbre d'actionnement (106) et où ledit arbre d'actionnement (106) est configuré pour déplacer ledit capot (102) associé entre ladite position fermée et ladite position ouverte, **caractérisé en ce que** ledit arbre d'actionnement (106) est mobile en rotation autour dudit axe de charnière (103).

2. Nacelle (100) selon la revendication 1, **caractérisée en ce que** ledit ensemble moteur (104) comporte un moteur (104a) avec un arbre moteur globalement parallèle audit axe de charnière (103) et un système d'engrenage (104b) présentant un pignon d'entrée solidaire de l'arbre moteur et un pignon de sortie solidaire de l'arbre d'actionnement (106), où le rapport d'engrenage du système d'engrenage (104b) est supérieur à 1.

3. Nacelle (100) selon la revendication 2, **caractérisée en ce que** ledit moteur (104a) est un moteur électrique.

4. Nacelle (100) selon la revendication 2, **caractérisée en ce que** ledit moteur (104a) est un moteur hydraulique.

5. Nacelle (100) selon l'une quelconque des revendications 1 à 4, **caractérisée en ce que** ledit ensemble moteur (104) comporte des moyens de verrouillage (104c) configurés pour verrouiller et déverrouiller la position dudit capot (102).

6. Nacelle (100) selon l'une quelconque des revendications 2 à 5, **caractérisée en ce que** ledit moteur (104a) est destiné à être fixé à un mât d'accrochage (16) dudit aéronef (10) et **en ce que** ledit arbre d'actionnement (106) est fixé au capot (102).

7. Nacelle (100) selon l'une quelconque des revendications 2 à 5, **caractérisée en ce que** ledit moteur (104a) est fixé au capot (102) et **en ce que** ledit arbre d'actionnement (106) est destiné à être fixé à un mât d'accrochage (16) dudit aéronef (10).

8. Nacelle (100) selon la revendication 7, **caractérisée en ce que** ledit capot (102) comporte une paroi intérieure et une paroi extérieure qui délimitent ensemble un logement et **en ce que** ledit moteur (104) est fixé dans ledit logement.

9. Nacelle (100) selon l'une des revendications 1 à 8, **caractérisée en ce que** chaque capot (102) comporte deux ensembles moteur (104) espacés l'un de l'autre le long dudit axe de charnière (103).

10. Système de motorisation (50) pour un aéronef (10) comportant un noyau (60) et une nacelle (100) selon l'une des revendications 1 à 9 entourant le noyau (60).

11. Aéronef (10) comportant au moins un système de motorisation (50) selon la revendication 10.

## Patentansprüche

1. Gondel (100) für ein Motorisierungssystem (50) eines Luftfahrzeugs (10), wobei sich die Gondel (100) um eine Längsachse (X) erstreckt und Folgendes umfasst:
- mindestens eine Haube (102), die zwischen einer geschlossenen Stellung und einer offenen Stellung um eine Scharnierachse (103) gelenkig gelagert ist, die sich parallel zu der Längsachse (X) erstreckt;
- für jede Haube (102) mindestens eine Motorbaugruppe (104), die eine Betätigungswelle (106) umfasst, und wobei die Betätigungswelle (106) dazu ausgelegt ist, die zugeordnete Haube (102) zwischen der geschlossenen Stellung und der offenen Stellung zu verlagern, **dadurch gekennzeichnet, dass** die Betätigungswelle (106) um die Scharnierachse (103) drehbeweglich ist.

2. Gondel (100) nach Anspruch 1, **dadurch gekennzeichnet, dass** die Motorbaugruppe (104) einen Motor (104a) mit einer insgesamt parallel zu der Scharnierachse (103) verlaufenden Motorwelle umfasst und ein Getriebesystem (104b), das ein mit der Motorwelle integral ausgebildetes Eingangszahnrad und ein mit der Betätigungswelle (106) integral ausgebildetes Ausgangszahnrad aufweist, wobei das Übersetzungsverhältnis des Getriebesystems (104b) größer als 1 ist.

3. Gondel (100) nach Anspruch 2, **dadurch gekennzeichnet, dass** der Motor (104a) ein Elektromotor ist.

4. Gondel (100) nach Anspruch 2, **dadurch gekennzeichnet, dass** der Motor (104a) ein Hydraulikmotor ist.

5. Gondel (100) nach einem der Ansprüche 1 bis 4, **dadurch gekennzeichnet, dass** die Motorbaugruppe (104) Verriegelungsmittel (104c) umfasst, die dazu ausgelegt sind, die Stellung der Haube (102) zu verriegeln und zu entriegeln.

6. Gondel (100) nach einem der Ansprüche 2 bis 5, **dadurch gekennzeichnet, dass** der Motor (104a) dazu bestimmt ist, an einem Aufhängungspylon (16) des Luftfahrzeugs (10) befestigt zu werden, und dass die Betätigungswelle (106) an der Haube (102) befestigt ist.

7. Gondel (100) nach einem der Ansprüche 2 bis 5, **dadurch gekennzeichnet, dass** der Motor (104a) an der Haube (102) befestigt ist und dass die Betätigungswelle (106) dazu bestimmt ist, an einem Aufhängungspylon (16) des Luftfahrzeugs (10) befestigt zu werden.

8. Gondel (100) nach Anspruch 7, **dadurch gekennzeichnet, dass** die Haube (102) eine Innenwand und eine Außenwand umfasst, die zusammen ein Gehäuse definieren, und dass der Motor (104) in dem Gehäuse befestigt ist.

9. Gondel (100) nach einem der Ansprüche 1 bis 8, **dadurch gekennzeichnet, dass** jede Haube (102) zwei Motorbaugruppen (104) umfasst, die entlang der Scharnierachse (103) voneinander beabstandet sind.

10. Motorisierungssystem (50) für ein Luftfahrzeug (10), umfassend einen Kern (60) und eine Gondel (100) nach einem der Ansprüche 1 bis 9, die den Kern (60) umgibt.

11. Luftfahrzeug (10), umfassend mindestens ein Motorisierungssystem (50) nach Anspruch 10.

## Claims

1. Nacelle (100) for a propulsion system (50) of an aircraft (10), said nacelle (100) extending around a longitudinal axis (X) and having:
- at least one cowl (102) mounted for pivoting between a closed position and an open position about a hinge axis (103) which extends parallel to the longitudinal axis (X),
- for each cowl (102), at least one motor assembly (104) having an actuating shaft (106), and in which said actuating shaft (106) is configured to move said associated cowl (102) between said closed position and said open position, **characterized in that** said actuating shaft (106) is rotationally movable about said hinge axis (103).

2. Nacelle (100) according to Claim 1, **characterized in that** said motor assembly (104) has a motor (104a) with a drive shaft which is parallel overall to said hinge axis (103) and a gear system (104b) having an input pinion secured to the drive shaft and an output pinion secured to the actuating shaft (106), in which the gear ratio of the gear system (104b) is greater than 1.

3. Nacelle (100) according to Claim 2, **characterized in that** said motor (104a) is an electric motor.

4. Nacelle (100) according to Claim 2, **characterized in that** said motor (104a) is a hydraulic motor.

5. Nacelle (100) according to any one of Claims 1 to 4, **characterized in that** said motor assembly (104) has locking means (104c) configured to lock and unlock the position of said cowl (102).

6. Nacelle (100) according to any one of Claims 2 to 5, **characterized in that** said motor (104a) is intended to be fixed to a mounting pylon (16) of said aircraft (10) and **in that** said actuating shaft (106) is fixed to the cowl (102).

7. Nacelle (100) according to any one of Claims 2 to 5, **characterized in that** said motor (104a) is fixed to the cowl (102) and **in that** said actuating shaft (106) is intended to be fixed to a mounting pylon (16) of said aircraft (10).

8. Nacelle (100) according to Claim 7, **characterized in that** said cowl (102) has an inner wall and an outer wall which together delimit a cavity and **in that** said motor (104) is fixed in said cavity.

9. Nacelle (100) according to one of Claims 1 to 8, **characterized in that** each cowl (102) has two motor assemblies (104) spaced apart along said hinge axis (103).

10. Propulsion system (50) for an aircraft (10) having a core (60) and a nacelle (100) according to one of Claims 1 to 9 surrounding the core (60).

11. Aircraft (10) having at least one propulsion system (50) according to Claim 10.
